# EUROPEAN PATENT APPLICATION

(11) **EP 4 852 394 A1**
(43) Date of publication of application: **09.12.2026**
(21) Application number: 25917810.1
(22) Date of filing: 03.09.2025
(51) Int. Cl.: H04L 45/745

(54) **METHOD FOR PROCESSING PACKET BY ROUTING DEVICE, ROUTING DEVICE, STORAGE MEDIUM, AND CHIP SYSTEM**

(30) Priority: 10.01.2025 CN 202510048349
(71) Applicant: HUAWEI TECHNOLOGIES CO., LTD., Shenzhen, Guangdong 518129 (CN)
(72) Inventor: SONG, Yongchao, Shenzhen, Guangdong 518129 (CN)
(74) Representative: Huawei European IPR
(86) International application number: PCT/CN2025/118659
(87) International publication number: WO 2026/148885

(57) **Abstract**

A packet processing method for a routing device, a routing device, a storage medium, and a chip system that are provided in this application relate to the field of terminal technologies. The method includes: A routing device may perform web address reassembly on a plurality of segmented handshake packets in an HTTPS request, and parse out a web address that an electronic device requests to access. The routing device may further block a web address to which access is not allowed, to reduce attacks from an insecure web address to the electronic device, and improve security of the electronic device.

## Description

This application claims priority to Chinese Patent Application No. 202510048349.0, filed with the China National Intellectual Property Administration on January 10, 2025 and entitled "PACKET PROCESSING METHOD FOR ROUTING DEVICE, ROUTING DEVICE, STORAGE MEDIUM, AND CHIP SYSTEM", which is incorporated herein by reference in its entirety.

### TECHNICAL FIELD

This application relates to the field of terminal technologies, and in particular, to a packet processing method for a routing device, a routing device, a storage medium, and a chip system.

### BACKGROUND

An electronic device may be connected to the Internet through a routing device, to access a resource on a server. In some scenarios, some applications on the electronic device may access an insecure web address, and the routing device may block the insecure web address. The insecure web address may be understood as a web address to which the routing device does not allow access.

However, in some implementations, the routing device may fail to block the insecure web address, degrading security of the electronic device.

### SUMMARY

This application provides a packet processing method for a routing device, a routing device, a storage medium, and a chip system. A routing device may perform web address reassembly on a plurality of segmented handshake packets in an HTTPS request, and parse out a web address that an electronic device requests to access. The routing device may further block a web address to which access is not allowed, to reduce attacks from an insecure web address to the electronic device, and improve security of the electronic device.

According to a first aspect, a packet processing method for a routing device is provided, and is applied to a routing device. The method includes:
obtaining N segmented packets from an electronic device, and sending the N segmented packets, where the routing device is unable to parse out a web address from the N segmented packets, and N is a positive integer greater than or equal to 1; obtaining an (N+1)^{th} segmented packet from the electronic device, and parsing out the web address from N+1 segmented packets, where the N segmented packets and the (N+1)^{th} segmented packet are packets in a same data flow; and when first information includes the web address, skipping, by the routing device, sending the (N+1)^{th} segmented packet, where the first information includes one or more web addresses to which access is not allowed. In this way, even if a previous 1^{st} segment of segmented packet to a previous N^{th} segment of segmented packet are sent, a server does not receive a complete packet and therefore cannot parse out a complete web address, and therefore the electronic device cannot access an insecure web address.

In a possible implementation, the method further includes: re-obtaining the (N+1)^{th} segmented packet from the electronic device, and skipping, by the routing device, sending the (N+1)^{th} segmented packet. In this way, the routing device may block a subsequent packet related to the data flow, to block a retransmitted segmented packet, so that the electronic device cannot access an insecure web address.

In a possible implementation, the method further includes: when the first information includes the web address, adding a mark to a data flow to which the (N+1)^{th} segmented packet belongs, where the mark indicates that the data flow includes a web address to which access is not allowed. The mark is added, so that the router not only can recognize a web address as an insecure web address, but also can recognize a data flow corresponding to the web address as an insecure data flow. In this way, when a segmented packet is retransmitted, the router may successfully block the retransmitted packet, so that the electronic device cannot access an insecure web address.

In a possible implementation, the method further includes: re-obtaining the (N+1)^{th} segmented packet from the electronic device, and skipping, by the routing device based on the mark, sending the (N+1)^{th} segmented packet. The routing device may determine, based on the mark, that a data flow corresponding to the (N+1)^{th} segmented packet is an insecure data flow, and the data flow includes a web address to which access is not allowed. In this case, the routing device may not send the (N+1)^{th} segmented packet. In this way, the routing device blocks an insecure packet.

In a possible implementation, obtaining the N segmented packets from the electronic device, and sending the N segmented packets includes: obtaining an i^{th} segmented packet from the electronic device; updating and storing a first anchor packet, where the first anchor packet is obtained based on i segmented packets from a 1^{st} segmented packet to the i^{th} segmented packet, and i is a positive integer less than or equal to N; and sending the i^{th} segmented packet, where the routing device is unable to parse out the web address from the first anchor packet. When the web address cannot be parsed out based on an updated anchor packet, the routing device cannot determine whether a packet sent by the electronic device includes an insecure web address. Therefore, to avoid blocking a network service, the routing device may back up the new anchor packet, and send the i^{th} segment of segmented packet.

In a possible implementation, the first anchor packet is obtained by combining the i segmented packets based on sequence-number-and-next-sequence-number information. In this way, based on the sequence-number-and-next-sequence-number information, the routing device may append a subsequent segmented packet to a replica of a 1^{st} segment of anchor packet, to gradually obtain a complete packet, to implement packet reassembly.

In a possible implementation, the method further includes: when the first information includes the web address, deleting a second anchor packet, where the second anchor packet is obtained based on N+1 segmented packets from the 1^{st} segmented packet to the (N+1)^{th} segmented packet. In this way, a large quantity of segmented packets of different data flows can be processed in limited memory space for a long time, space occupation of the routing device is effectively controlled, and unnecessary memory data on the router is cleared in a timely manner, to improve running efficiency of the router.

In a possible implementation, the method further includes: if a quantity of times of matching against second information is greater than or equal to a preset quantity of times of matching, deleting the first anchor packet, where the second information indicates that the N segmented packets and the (N+1)^{th} segmented packet are packets in a same data flow; or if a time interval, from a moment at which the 1^{st} segmented packet is obtained from the electronic device to a moment at which it is determined that the first information includes the web address, is greater than or equal to preset matching duration, deleting the first anchor packet. In this way, a large quantity of segmented packets of different data flows can be processed in limited memory space for a long time, and unnecessary memory data on the router is cleared in a timely manner, to reduce memory space occupied by the router and improve running efficiency of the router.

In a possible implementation, the second information includes five-tuple information of the data flow, the web address includes a web address of a hypertext transfer protocol secure HTTPS type, and the N segmented packets are handshake packets of a secure socket layer SSL protocol. The routing device may perform web address reassembly on a plurality of segmented handshake packets of the SSL protocol in a request of an HTTPS type, and parse out, based on the five-tuple information or the like, a web address that the electronic device requests to access. The routing device may further block a web address to which access is not allowed, to reduce attacks from an insecure web address to the electronic device, and improve security of the electronic device.

According to a second aspect, a routing device is provided. The routing device includes one or more processors and a memory. The memory is configured to store one or more programs. The one or more processors are configured to invoke the one or more programs, to perform the method described in any one of the first aspect or the possible implementations of the first aspect.

According to a third aspect, a chip or a chip system is provided. The chip or the chip system is used in a routing device, and includes one or more processors. The one or more processors are configured to invoke instructions, to perform the method described in any one of the first aspect or the possible implementations of the first aspect. A communication interface in the chip may be an input/output interface, a pin, a circuit, or the like.

In a possible implementation, the chip or the chip system described above in this application further includes at least one memory, and the at least one memory stores instructions. The memory may be a storage unit in the chip, for example, a register or a cache, or may be a storage unit (for example, a read-only memory or a random access memory) of the chip.

According to a fourth aspect, a readable storage medium (which may also be referred to as a computer-readable storage medium) is provided. The readable storage medium stores a program. When the program is run on a routing device, the routing device is enabled to perform the method described in any one of the first aspect or the possible implementations of the first aspect.

According to a fifth aspect, a program product (which may also be referred to as a computer program product) is provided, and the program product includes a program. When the program is run on a routing device, the routing device is enabled to perform the method described in any one of the first aspect or the possible implementations of the first aspect.

It should be understood that the technical solutions in the second aspect to the fifth aspect of this application correspond to the technical solutions in the first aspect of this application. Beneficial effects achieved in the aspects and corresponding feasible implementations are similar, and details are not described again.

### BRIEF DESCRIPTION OF DRAWINGS

FIG. 1 is a diagram of blocking an insecure web address by a routing device according to an embodiment of this application;
FIG. 2 is a diagram of device interaction in which a routing device blocks an insecure web address according to an embodiment of this application;
FIG. 3 is another diagram of blocking an insecure web address by a routing device according to an embodiment of this application;
FIG. 4 is still another diagram of blocking an insecure web address by a routing device according to an embodiment of this application;
FIG. 5 is a schematic flowchart of a packet processing method for a routing device according to an embodiment of this application;
FIG. 6 is a diagram of parsing a handshake packet by a router according to an embodiment of this application;
FIG. 7 is a diagram of a retransmission mechanism of a protocol according to an embodiment of this application;
FIG. 8 is a diagram of a packet processing method for a routing device in which a mark (mark) is used according to an embodiment of this application;
FIG. 9 is a diagram of a packet processing method for a routing device according to an embodiment of this application;
FIG. 10 is a diagram of a structure of a routing device according to an embodiment of this application; and
FIG. 11 is a diagram of a structure of a chip system according to an embodiment of this application.

### DESCRIPTION OF EMBODIMENTS

To clearly describe the technical solutions in embodiments of this application, the following briefly describes some terms and technologies used in embodiments of this application.

### 1. Terms

In embodiments of this application, the terms "first", "second", and the like are used to distinguish between same items or similar items that have basically same functions and purposes. For example, a first chip and a second chip are merely intended to distinguish between different chips, but not to limit a sequence of the chips. A person skilled in the art can understand that the terms "first", "second", and the like do not limit a quantity or an execution sequence, and the terms "first", "second", and the like do not indicate a definite difference.

It should be noted that, in embodiments of this application, the term "in an example", "for example", or the like is used to give an example, an illustration, or a description. Any embodiment or design scheme described with "in an example" or "for example" in this application should not be construed as being more preferred or advantageous than another embodiment or design scheme. To be precise, the term "in an example", "for example", or the like is intended to present a related concept in a specific manner.

In embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

An electronic device may be connected to the Internet through a routing device, to access a resource on a server. In some scenarios, some applications on the electronic device may access an insecure web address, and the routing device may block the insecure web address. The insecure web address may be understood as a web address to which the routing device does not allow access.

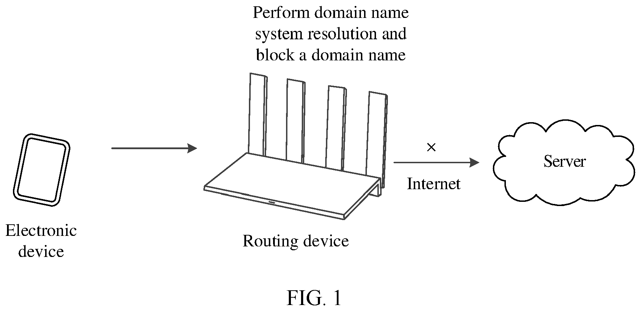

In some implementations, as shown in FIG. 1, when some applications, for example, a browser, on an electronic device access a server through a routing device, the routing device may perform domain name system (domain name system, DNS) resolution on a web address to be accessed by the applications, and block an insecure web address.

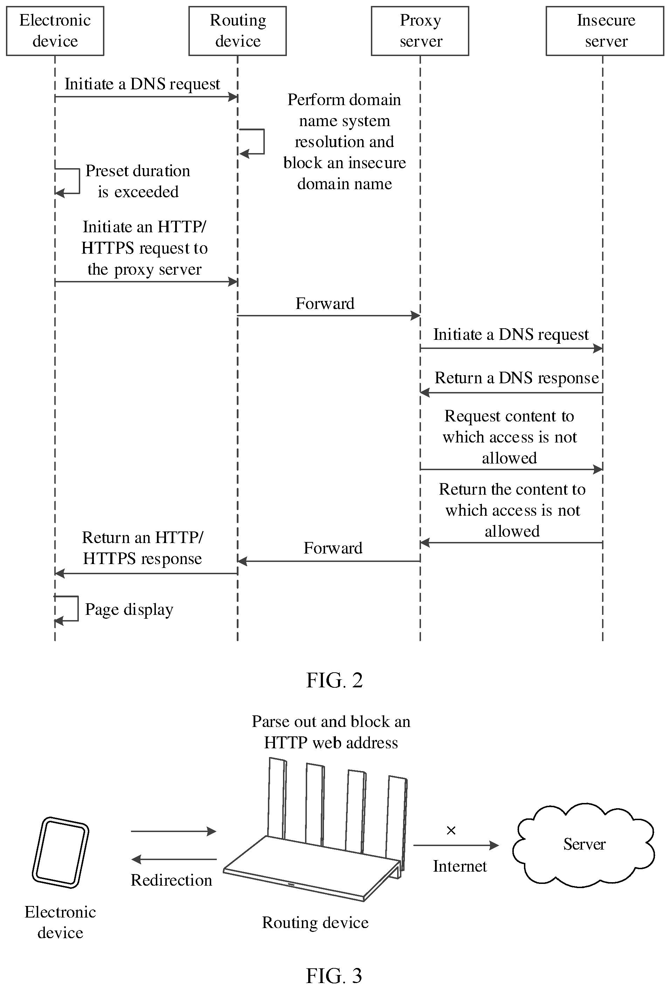

For example, as shown in FIG. 2, a user may enter an insecure domain name in the browser of the electronic device. It is assumed that the insecure domain name is www.xxx.com. The browser may trigger the electronic device to initiate a DNS request to the server (refer to as a target server) through the routing device. Before the routing device forwards the DNS request, the routing device may block the DNS request, and parse out a domain name in the DNS request. If the routing device determines that the parsed-out domain name is an insecure domain name, the routing device may block the insecure domain name, and does not forward the insecure domain name to the target server.

However, in the foregoing implementation process, the routing device may fail to block the insecure domain name. When the browser does not obtain a response corresponding to the DNS request for a long time, for example, the browser does not obtain an IP address corresponding to the insecure domain name within preset duration, the browser may encapsulate the insecure domain name into a hypertext transfer protocol (hypertext transfer protocol, HTTP) request or a hypertext transfer protocol secure (hypertext transfer protocol secure, HTTPS) request, and trigger the electronic device to access a proxy server (proxy server) through the routing device. The proxy server may be understood as an intermediary server, and the intermediary server may act as an intermediary between the electronic device and the target server.

After obtaining the HTTP request or the HTTPS request, the proxy server may parse out the insecure domain name, and initiate a DNS request to a server to which the insecure domain name belongs (referred to as an insecure server for short). The insecure server may return a DNS response to the proxy server, where the DNS response may include the IP address corresponding to the insecure domain name. Further, the proxy server may request, from the insecure server based on the IP address, content to which access is not allowed; and the insecure server may return, to the proxy server, the content to which access is not allowed. It can be understood that a web address block list may be preset on the routing device, the web address block list includes one or more web addresses, and the content to which access is not allowed may be understood as insecure content, on the server, that corresponds to the one or more web addresses.

After obtaining the content to which access is not allowed, the proxy server may return an HTTP response or an HTTPS response to the electronic device through the routing device, where the HTTP response or the HTTPS response may include the content to which access is not allowed. In this way, the browser may trigger the electronic device to display, based on the HTTP response or the HTTPS response, the content to which access is not allowed. For example, if the HTTP response or the HTTPS response includes hypertext markup language (hypertext markup language, HTML) content to which access is not allowed, the electronic device may display the HTML content.

In some other implementations, as shown in FIG. 3, some routing devices may alternatively block an HTTP web address.

For example, the routing device may not block a DNS request. In this way, a browser may obtain an IP address returned by an insecure server, and the browser may encapsulate the IP address into an HTTP request. When the browser triggers an electronic device to initiate an HTTP request, because data in the HTTP request is not encrypted according to the secure sockets layer (secure sockets layer, SSL) protocol or the transport layer security (transport layer security, TLS) protocol, the routing device may obtain an HTTP web address and block the HTTP web address. After recognizing the HTTP web address as an insecure web address, the routing device may redirect the HTTP request to a resource locally preset on the routing device. The locally preset resource may be used to notify a user that a website to be accessed is a website to which access is not allowed, a website to which access is not recommended, a risky website, or the like. However, in the implementation process corresponding to FIG. 3, the routing device can block only an HTTP request at a high probability, but cannot successfully block an HTTPS request effectively.

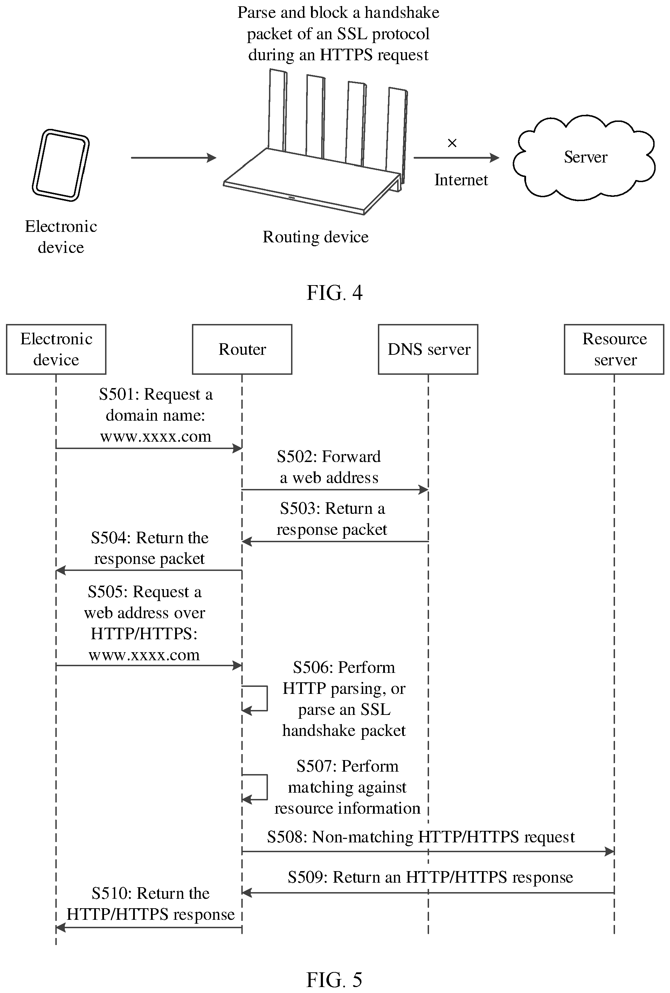

In still some other implementations, as shown in FIG. 4, some routing devices may alternatively block an HTTPS request.

It can be understood that to-be-transmitted data in the HTTPS request may be encrypted according to the SSL protocol or the TLS protocol. For ease of description, the SSL protocol is used below as an example for description. An implementation in which the TLS protocol is used is similar to an implementation in which the SSL protocol is used. Details are not described again. It can be understood that encryption is not performed in a handshake phase of the SSL protocol. To be specific, in the handshake phase of the SSL protocol, an electronic device and a server exchange plaintext. Therefore, the routing device may obtain a server_name field in a handshake packet of the SSL protocol, where the server_name field may indicate a host name or a server name. If the handshake packet of the SSL protocol is a complete packet or the handshake packet includes a complete HTTPS web address, the routing device may block the HTTPS web address, to determine whether the HTTPS web address is an insecure web address.

However, in a possible scenario, the server_name field may be stored in a data body (payload) of the handshake packet, and the payload may serve as a carrier for data transmission. When one handshake packet cannot carry all handshake information (which may also be referred to as handshake data) of the SSL protocol, the electronic device segments the handshake packet, divides the handshake information of the SSL protocol into a plurality of payloads, and sends the payloads by using a plurality of segmented handshake packets. In this case, the routing device obtains independent sk_buff structures, each sk_buff structure may include one payload, and each payload corresponds to a part of handshake information. Each sk_buff structure may be referred to as an skb for short. That is, in this case, the routing device cannot obtain all the handshake information of the SSL protocol from one skb. In other words, the routing device cannot obtain a complete web address from the segmented handshake packets. Consequently, the routing device cannot recognize an insecure web address, and fails to block the insecure web address.

In view of this, embodiments of this application provide a packet processing method for a routing device. The routing device may perform web address reassembly on a plurality of segmented handshake packets in an HTTPS request, and parse out a web address that an electronic device requests to access. The routing device may further block a web address to which access is not allowed, to reduce attacks from an insecure web address to the electronic device, and improve security of the electronic device.

It can be understood that the routing device in embodiments of this application may be configured to forward a data packet in a network, for example, forward the data packet from one network interface to another network interface, to ensure that data can be transmitted between the electronic device and a network device (for example, a server). The routing device may include but is not limited to a router, a gateway device, an optical modem, an optical network terminal (optical network terminal, ONT), a switch, a bridge, a repeater, portable Wi-Fi, customer premises equipment (customer premises equipment, CPE), a firewall, and the like. This is not limited in embodiments of this application. For ease of description, an example in which the routing device is a router is subsequently used for description.

The router may include a kernel forwarding plane (forwarding plane) and a kernel control plane (control plane). The kernel forwarding plane may be responsible for data packet searching, forwarding, processing, and the like. The kernel forwarding plane may forward, based on a routing table generated by the kernel control plane, a data packet that enters the router to an appropriate output interface. The kernel forwarding plane may also be referred to as a forwarding plane or a data plane for short. The kernel control plane may be responsible for network management and configuration, including route selection, network protocol running, routing table construction and maintenance, and the like. The kernel control plane may also be referred to as a control plane for short.

The router may include a Wi-Fi network interface card and/or an Ethernet network interface card. The Wi-Fi network interface card and/or the Ethernet network interface card may be configured to forward data between the server and the electronic device. In embodiments of this application, the Wi-Fi network interface card and/or the Ethernet network interface card may be further configured to parse a server_name field in a handshake packet of the SSL protocol and parse a host field in an HTTP packet. It can be understood that the router may support the electronic device in requesting a web address according to the IPv4 protocol or requesting a web address according to the IPv6 protocol, and may further receive an escape character. The router and the electronic device may be connected in a wired or wireless manner.

The electronic device may alternatively be a device in any form. For example, the electronic device may include a mobile phone, a tablet computer, a palmtop computer, a notebook computer, a mobile internet device (mobile internet device, MID), a wearable device, a virtual reality (virtual reality, VR) device, an augmented reality (augmented reality, AR) device, a device in industrial control (industrial control), a device in self-driving (self-driving), a device in remote medical surgery (remote medical surgery), a device in a smart grid (smart grid), a device in transportation safety (transportation safety), a device in a smart city (smart city), a device in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device, a computing device or another processing device connected to a wireless modem, a vehicle-mounted device, a device in a 5G network, or a device in a future evolved public land mobile communication network (public land mobile network, PLMN). This is not limited in embodiments of this application.

In embodiments of this application, the electronic device may include a Wi-Fi network interface card and/or an Ethernet network interface card. The Wi-Fi network interface card and/or the Ethernet network interface card may be configured to connect to the router to send/receive a packet.

The following describes in detail the method in embodiments of this application by using specific embodiments. The following embodiments may be implemented in combination or independently, and same or similar concepts or processes may not be described in detail in some embodiments.

FIG. 5 is a schematic flowchart of a packet processing method for a routing device according to an embodiment of this application.

The packet processing method for a routing device in this embodiment of this application relates to interaction between an electronic device, a router, a DNS server, and a resource server. The electronic device includes an application for accessing a web address, for example, a browser. The DNS server may include a DNS response system, and the DNS response system may be configured to respond to a DNS request initiated by the electronic device. The resource server may include a network service (web server) system, and the network service system may be configured to respond to a resource access request initiated by the electronic device.

The packet processing method for a routing device may include the following step S501 to step S510. It can be understood that processes or steps in the embodiment corresponding to FIG. 5 do not necessarily need to be performed in sequence. An execution sequence of step S501 to step S510 is not limited in this embodiment of this application, provided that the packet processing method for a routing device can be implemented.

S501: The electronic device requests a domain name.

In a possible scenario, a user may search for a domain name, for example, www.xxx.com, in the browser of the electronic device. The browser of the electronic device may encapsulate the domain name into a packet, and trigger the electronic device to send the packet to the server through the router.

S502: The router forwards the packet corresponding to the domain name.

After receiving the packet corresponding to the domain name, the router may forward the packet to the DNS server.

S503: The DNS server returns a response packet to the router.

In a possible implementation, a mapping table for a domain name and an IP address may be locally cached on the DNS server. After obtaining the packet for requesting the domain name, the DNS server may query the mapping table for a web address corresponding to the domain name, for example, an IP address corresponding to www.xxx.com. The DNS server may encapsulate the found IP address into the response packet, and return the response packet to the router.

S504: The router returns the response packet to the electronic device.

After receiving the response packet from the DNS server, the router may forward the response packet to the electronic device. In this way, the browser of the electronic device can receive the response packet.

S505: The electronic device sends an HTTP request or an HTTPS request.

The browser of the electronic device may trigger, based on the response packet, the electronic device to send the HTTP request or the HTTPS request. For example, the browser of the electronic device may obtain, from the response packet, the IP address corresponding to www.xxx.com, and encapsulate the IP address into the HTTP request or the HTTPS request based on the IP address. The browser may further trigger the electronic device to send the HTTP request or the HTTPS request.

S506: The router performs HTTP parsing or parses a handshake packet of the SSL protocol.

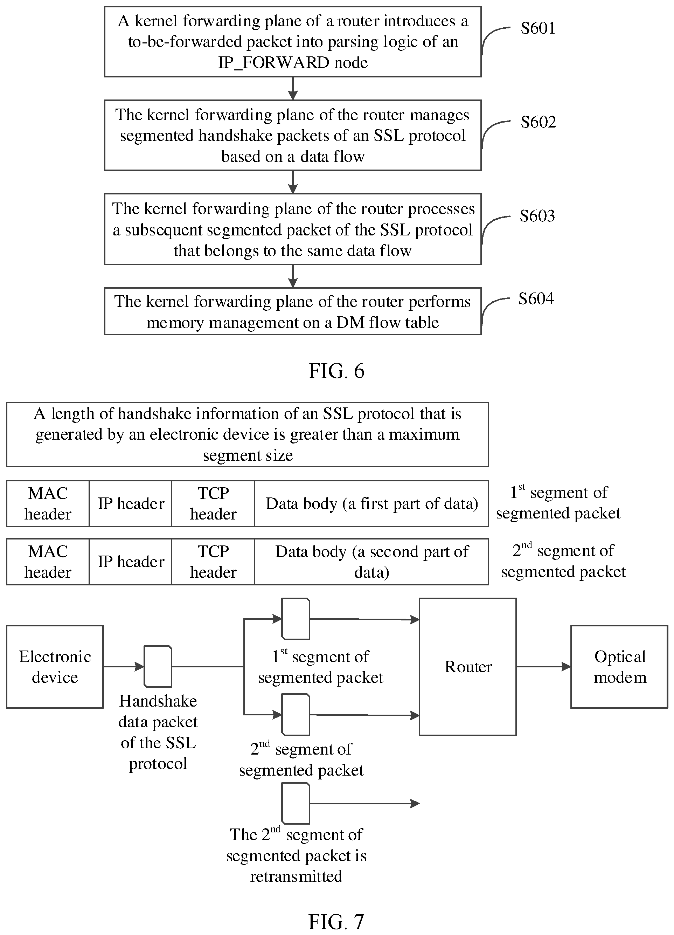

Parsing the handshake packet of the SSL protocol by the router may include the following processes: recognizing a 1^{st} segment of anchor packet of the handshake packet, reassembling segmented packets, parsing out a web address, and the like. For a specific process of parsing the handshake packet of the SSL protocol by the router, refer to related descriptions in an embodiment corresponding to FIG. 6 below. Details are not described. After parsing out the web address, the router may perform step S507.

Certainly, the router may alternatively perform HTTP parsing, and perform step S507. It can be understood that, because an HTTP packet is a non-encrypted packet, there is no handshake packet. Therefore, the router may obtain a mark (host) of a server domain name of the HTTP packet without parsing a handshake packet.

S507: The router performs matching between the parsed-out web address and resource information.

The router may perform matching between the parsed-out web address and the resource information on the router, to determine whether a parsed-out packet needs to be blocked. The resource information may be information in a local memory of the router, and the resource information may include one or more insecure web addresses.

In a possible implementation, the router convert matching between character strings into matching against a tree value of the resource information, and perform comparison between character strings upon collision, to implement matching between the web address and the resource information. The tree value may be understood as a value stored in a hash bucket (hash bucket).

For example, the router may store one or more insecure web addresses in one or more hash buckets. The hash bucket is a basic unit in a data structure of a hash table, and may be used to store an element of the hash table. It can be understood that each hash bucket may have a corresponding hash mark, and different hash buckets correspond to different hash marks. Each hash bucket may store one or more insecure web addresses, and hash values corresponding to one or more insecure web addresses stored in a same hash bucket are the same. Optionally, the hash value corresponding to the one or more insecure web addresses may be used as a hash mark of a hash bucket in which the one or more insecure web addresses are located.

For example, a first hash bucket stores A insecure web addresses, all hash values corresponding to the A insecure web addresses are hashA, and a hash mark of the first hash bucket may be hashA. A second hash bucket stores B insecure web addresses, all hash values corresponding to the B insecure web addresses are hashB, and a hash mark of the second hash bucket may be hashB. hashA is different from hashB, and A and B are positive integers.

After parsing out the web address, the router may perform hash function processing on the web address to obtain a hash value, and performing matching between the hash value and a hash mark of one or more hash buckets. If the hash value of the web address is the same as a hash mark of a hash bucket, to prevent hash collision, the router may further compare a character string of the web address with a character string of one or more insecure web addresses in the hash bucket. The hash collision may be understood as that a same hash value is obtained by processing two different character strings according to a hash function.

The character strings being a same character string indicates that the parsed-out web address successfully matches a web address in the resource information. To be specific, the web address is an insecure web address, and the router may block the web address. This increases a web address matching delay while maintaining a blocking success ratio, to increase a data processing speed of the router.

In another possible implementation, the router convert matching between character strings into matching against an array value of the resource information, to implement matching between the web address and the resource information.

For example, the router may store one or more insecure web addresses in an array. Each element of the array may be used to store an instance of a data structure. An instance of each data structure may include an insecure web address and a hash value corresponding to the insecure web address. It can be understood that hash values corresponding to instances of different data structures may be the same or different.

For example, an instance of a first data structure may be an insecure web address C, and a hash value corresponding to the insecure web address C is hashC. An instance of a second data structure may be an insecure web address D, and a hash value corresponding to the insecure web address D is hashD. hashC and hashD may be the same or different.

After parsing out the web address, the router may process the web address according to a hash function to obtain a hash value, and perform matching between the hash value and a hash value corresponding to an instance of a data structure in the array. If the hash value of the web address is the same as a hash value corresponding to an instance of a data structure, the router may further compare a character string of the web address with a character string of an insecure web address in the instance of the data structure. The character strings being a same character string indicates that the parsed-out web address successfully matches a web address in the resource information. To be specific, the web address is an insecure web address, and the router may block the web address.

Optionally, the router may further sort instances of data structures in the array in ascending order or descending order based on values of hash values corresponding to the instances of the data structures. A hash value in the array is searched for based on the hash value of the web address by using a binary search method. It can be understood that the array is sorted, and web address matching is performed by using the binary search method, so that search efficiency can be improved, and time complexity and space complexity of searching can be reduced. This increases a web address matching delay while maintaining a blocking success ratio, to increase a data processing speed of the router.

Certainly, the router may alternatively implement matching between the web address and the resource information in another manner. This is not limited in this embodiment of this application.

S508: The router forwards a non-matching HTTP request or HTTPS request to the resource server.

The parsed-out web address failing to match a web address in the resource information indicates that the parsed-out web address is not an insecure web address and needs not to be blocked. In this case, the router may forward the HTTP request or the HTTPS request to the resource server.

The parsed-out web address successfully matching a web address in the resource information indicates that the parsed-out web address is an insecure web address and needs to be blocked. In this case, the router does not forward the HTTP request or the HTTPS request to the resource server. In this way, the router can perform web address reassembly on segmented handshake packets in the HTTPS request initiated by the electronic device, and resolve a web address domain name, to effectively block access to an insecure web address.

S509: The resource server returns a response packet for the HTTP request or a response packet for the HTTPS request to the router.

S510: The router returns the response packet for the HTTP request or a response packet for the HTTPS request to the electronic device.

After obtaining the HTTP request or the HTTPS request, the resource server may query to-be-accessed content based on an IP address in the request, encapsulate found to-be-accessed content into a response packet, and return the response packet to the browser of the electronic device through the router. Further, the browser may trigger the electronic device to display content in the response packet.

FIG. 6 is a diagram of parsing a handshake packet by a router according to an embodiment of this application.

It can be understood that an implementation process of the embodiment corresponding to FIG. 6 may include the implementation process of step S506 and step S507 in the embodiment corresponding to FIG. 5, for example, include a process of parsing a handshake packet of the SSL protocol by the router. Processes or steps in the embodiment corresponding to FIG. 6 do not necessarily need to be performed in sequence. An execution sequence of step S601 to step S604 is not limited in this embodiment of this application, provided that the packet processing method for a routing device can be implemented. In a possible implementation, the embodiment corresponding to FIG. 6 may be performed by a kernel forwarding plane of the router. For ease of description, an example in which the kernel forwarding plane parses a handshake packet is used below for description.

S601: The kernel forwarding plane of the router introduces a to-be-forwarded packet into parsing logic of an IP_FORWARD node.

The kernel forwarding plane may introduce the to-be-forwarded packet into the parsing logic of the IP_FORWARD node. The IP_FORWARD node may be configured to control forwarding of a data packet.

For example, in the parsing logic of the IP_FORWARD node, the kernel forwarding plane may obtain, from the IP_FORWARD node, a piece of connection tracking corresponding to each skb. It can be understood that, during network data transmission according to the transmission control protocol (transmission control protocol, TCP), the user datagram protocol (user datagram protocol, UDP), or the like, an end-to-end data flow (flow) may be established between an electronic device and a server, and a connection tracking table corresponding to the data flow may be stored in the protocol. The connection tracking table records five-tuple information, aging time information, and the like, to manage a network connection status and the like. In the connection tracking table, one data flow may correspond to one piece of connection tracking. One or more packets may be transmitted between the electronic device and the server based on connection tracking.

The kernel forwarding plane may obtain five-tuple information from connection tracking corresponding to a packet. The five-tuple information may be understood as a set of five key fields used to uniquely identify a data flow. The key fields are combined to distinguish between different data flows. The set may include a source IP address (source IP address), a destination IP address (destination IP address), a source port number (source port number), a destination port number (destination port number), and a protocol type (protocol). The source IP address indicates an IP address of a sender of a data packet. The destination IP address indicates an IP address of a receiver of the data packet. The source port number indicates a port number used by the sender. The destination port number indicates a port number used by the receiver. The protocol type indicates a protocol type used at transport layer, for example, TCP or UDP.

The kernel forwarding plane may filter packets of a port 443 based on the destination port in the five-tuple information. It can be understood that a packet whose destination port is the port 443 is an HTTPS packet. Filtering the packets of the port 443 may be understood as filtering HTTPS packets. For an HTTP packet, a corresponding port may be 80 or 8080.

S602: The kernel forwarding plane of the router manages segmented handshake packets of the SSL protocol based on a data flow.

For example, the kernel forwarding plane may recognize a 1^{st} segment of anchor packet of a handshake packet of the SSL protocol. The 1^{st} segment of anchor packet may be understood as a starting part of the handshake packet. The 1^{st} segment of anchor packet may include but is not limited to one or more of the following: a content type (content type) of the packet, an SSL protocol version (version), a length (length) of subsequent data, and the like. The content type of the packet may include a handshake packet, an alert packet, an application data packet, and the like.

It can be understood that the HTTPS packet may include a packet header, for example, a MAC header, an IP header, or a TCP header, and may further include a data body (payload). The data body may include a format and data of the handshake packet and other information. The kernel forwarding plane may first determine whether a parsed-out content type of a segmented packet is the handshake packet. If the parsed-out content type of the segmented packet is a mark of the handshake packet, the kernel forwarding plane may further determine whether a handshake message type (handshake type) of the handshake packet is Client Hello. The Client Hello is a message that a browser triggers the electronic device to send to the server and that indicates to start a handshake procedure. If the handshake message type is the Client Hello, the kernel forwarding plane may determine that the segmented packet is the 1^{st} segment of anchor packet, which may also be referred to as a 1^{st} segment of segmented packet. For example, the kernel forwarding plane determining that the content type (content type) of the segmented packet is the mark Handshake of the handshake packet and the handshake message type (handshake type) of the handshake packet is the Client Hello indicates that the segmented packet is the 1^{st} segment of anchor packet, namely, the 1^{st} segment of segmented packet.

The kernel forwarding plane may further back up the 1^{st} segment of anchor packet. For example, the kernel forwarding plane may cache a backup of the 1^{st} segment of anchor packet in a data management (data management, DM) flow table, to facilitate reassembly with a subsequent segmented packet. The backup of the 1^{st} segment of anchor packet may also be referred to as a replica of the 1^{st} segment of anchor packet. The DM flow table may record the following information of the 1^{st} segment of anchor packet: five-tuple information, a quantity of times of matching, a data backup buffer, and the like.

The kernel forwarding plane may further allow the backed-up 1^{st} segment of anchor packet to pass, in other words, send the backed-up 1^{st} segment of anchor packet. It can be understood that, because the kernel forwarding plane has not obtained a complete web address when obtaining the 1^{st} segment of the anchor packet, the kernel forwarding plane cannot determine whether the current packet includes an insecure web address. To avoid blocking a network service, the kernel forwarding plane may allow the 1^{st} segment of anchor packet to pass after the backup.

S603: The kernel forwarding plane of the router processes a subsequent segmented packet of the SSL protocol that belongs to the same data flow.

The kernel forwarding plane may recognize a subsequent segmented packet of the same data flow based on five-tuple information, sequence-number-(sequence number, seq)-and-next-sequence-number (next sequence number, nseq) information, and the like. The subsequent segmented packet may also be understood as a subsequent data packet of the same data flow. It can be understood that five-tuple information of a same packet is the same. To be specific, five-tuple information of all segmented packets of a same packet is the same. Therefore, it can be determined, based on five-tuple information, whether segmented packets belong to a same packet, namely, a same data flow.

A sequence number may be used to track a sequence of data packets, so that data can be reassembled in a correct sequence. The sequence-number-and-next-sequence-number information may also be referred to as seq&nseq information for short. seq represents a sequence number of a current data packet, and nseq represents a sequence number of a next data packet that is expected to be received.

The kernel forwarding plane may further reassemble a subsequent segmented packet with the replica of the 1^{st} segment of anchor packet in the DM flow table, to parse out a web address in a server_name field.

For example, the kernel forwarding plane may parse out five-tuple information of a segmented packet that matches the port 443, and determine whether the five-tuple information of the segmented packet is the same as five-tuple information in the cached replica of the 1^{st} segment of anchor packet. If the five-tuple information of the segmented packet is the same as the five-tuple information in the replica of the 1^{st} segment of anchor packet, the kernel forwarding plane may determine that the segmented packet is a subsequent segmented packet of the 1^{st} segment of anchor packet.

To ensure that segmented packets can be reassembled in a correct sequence, the kernel forwarding plane may obtain seq&nseq information of the segmented packets. For a segmented packet from which same five-tuple information is parsed out and whose sequence number matches a sequence, the kernel forwarding plane may append the segmented packet to the replica of the 1^{st} segment of anchor packet to gradually obtain a complete packet, to implement packet reassembly. It can be understood that, if the segmented handshake packets include N segments, the kernel forwarding plane may reassemble the N segments of packets until the web address corresponding to the server_name field is parsed out.

For example, when the web address cannot be parsed out from the 1^{st} segment of anchor packet, the kernel forwarding plane may back up the 1^{st} segment of anchor packet in the DM flow table, and allow the 1^{st} segment of anchor packet to pass. That is, the kernel forwarding plane may store the replica of the 1^{st} segment of anchor packet, and send the 1^{st} segment of anchor packet.

After the kernel forwarding plane recognizes a 2^{nd} segment of segmented packet of the handshake packet based on five-tuple information and seq&nseq information, the kernel forwarding plane may append a replica of the 2^{nd} segment of segmented packet to the replica of the 1^{st} segment of anchor packet (namely, the 1^{st} segment of segmented packet), and reassemble the replica of the 1^{st} segment of anchor packet and the replica of the 2^{nd} segment of segmented packet into a new anchor packet. In this case, it can be understood that the quantity of times of matching against the 1^{st} segment of anchor-section packet is 1. When the web address cannot be parsed out from the new anchor packet, the kernel forwarding plane may back up the new anchor packet, and send the 2^{nd} segment of segmented packet.

Similarly, after the kernel forwarding plane recognizes a 3^{rd} segment of segmented packet of the handshake packet based on five-tuple information and seq&nseq information, the kernel forwarding plane may append a replica of the 3^{rd} segment of segmented packet to an anchor packet (to be specific, an anchor packet obtained by reassembling the replica of the 1^{st} segment of anchor packet and the replica of the 2^{nd} segment of segmented packet), and reassemble the anchor packet and the replica of the 3^{rd} segment of segmented packet into a new anchor packet. In this case, it can be understood that the quantity of times of matching against the 1^{st} segment of anchor-section packet is 2. When the web address cannot be parsed out from the new anchor packet, the kernel forwarding plane may back up the new anchor packet, and send the 3^{rd} segment of segmented packet.

By analogy, the kernel forwarding plane may reassemble a 4^{th} segment, ..., and an N^{th} segment of packets, until the web address corresponding to the server_name field is parsed out, or until a preset quantity of times of matching or preset matching duration is exceeded. If an anchor packet and a replica of the N^{th} segment of segmented packet can be reassembled into a new anchor packet, it can be understood that the quantity of times of matching against the 1^{st} segment of anchor packet is N-1.

It can be understood that, after the web address corresponding to the server_name field is parsed out, the kernel forwarding plane may perform matching between the parsed-out web address and a web address in resource information, to determine whether the parsed-out web address is an insecure web address, to be specific, whether the parsed-out web address needs to be blocked.

The parsed-out web address failing to match the web address in the resource information indicates that the parsed-out web address is not an insecure web address, and the kernel forwarding plane may not block the parsed-out web address. This may also be understood as that, if the parsed-out web address is not an insecure web address, the kernel forwarding plane may send a last recognized segmented packet, so that a packet received by the server is a complete packet. For example, if the kernel forwarding plane reassembles the replica of the N^{th} segment of segmented packet, parses out the web address corresponding to the server_name field, and determines that the web address is not an insecure web address, the kernel forwarding plane may send the N^{th} segment of segmented packet. In this way, the server may receive a complete packet, to parse out a complete web address, so that the electronic device can access the web address.

The parsed-out web address successfully matching the web address in the resource information indicates that the parsed-out web address is an insecure web address, and the kernel forwarding plane blocks the parsed-out web address. This may also be understood as that, if the parsed-out web address is an insecure web address, the kernel forwarding plane does not send a last recognized segmented packet, and therefore a packet received by the server is not a complete packet. For example, if the kernel forwarding plane reassembles the replica of the N^{th} segment of segmented packet, parses out the web address corresponding to the server_name field, and determines that the web address is an insecure web address, the kernel forwarding plane does not send the N^{th} segment of segmented packet. In this way, even if the previous 1^{st} segment of segmented packet to a previous (N-1)^{th} segment of segmented packet are sent, the server does not receive a complete packet and therefore cannot parse out a complete web address, and therefore the electronic device cannot access an insecure web address.

Optionally, in this embodiment of this application, the router may perform reassembly, parsing, matching, blocking, forwarding, or the like on segmented packets at a network layer of a protocol.

S604: The kernel forwarding plane of the router performs memory management on the DM flow table.

Optionally, when the web address corresponding to the server_name field is parsed out, the kernel forwarding plane may release the replica of the 1^{st} segment of anchor packet and replicas of subsequent segmented packets in the DM flow table.

Optionally, a quantity of times of matching against the five-tuple information of the 1^{st} segment of anchor packet exceeding the preset quantity of times of matching may also be understood as that the quantity of times of matching against the 1^{st} segment of anchor packet exceeds the preset quantity of times of matching. This indicates that a probability that a packet can be reassembled based on the 1^{st} segment of anchor packet is low. To save memory space, the kernel forwarding plane may release the anchor packet in the DM flow table. The preset quantity of times of matching may be preset by the router, and the preset quantity of times of matching may be determined based on experimental testing or an empirical value. A specific value of the preset quantity of times of matching is not limited in this embodiment of this application.

Optionally, when duration of matching against the 1^{st} segment of anchor packet exceeds the preset matching duration, the kernel forwarding plane may release the anchor packet in the DM flow table. The preset matching duration may be preset by the router, and the preset matching duration may be determined based on experimental testing or an empirical value, for example, may be set to 2 seconds (s) or a value close to 2s. A specific value of the preset matching duration is not limited in this embodiment of this application.

Certainly, the kernel forwarding plane may alternatively periodically release the replica of the 1^{st} segment of anchor packet and replicas of subsequent segmented packets in the DM flow table that meet the foregoing conditions. This is not limited in this embodiment of this application. A memory release process may also be understood as an aging process, or a process of destroying unneeded data or invalid data. In this way, a large quantity of segmented packets of different data flows can be processed in limited memory space for a long time, space occupation of the DM flow table is effectively controlled, and unnecessary memory data on the router is cleared in a timely manner, to reduce memory space occupied by the router and improve running efficiency of the router.

It can be understood that, for a protocol with a retransmission mechanism, a router may still be unable to block an insecure web address.

As shown in FIG. 7, an electronic device may send a handshake data packet of the SSL protocol to a router. However, when a length of handshake information of the SSL protocol that is generated by the electronic device is greater than a maximum segment size (maximum segment size, MSS), the electronic device may send data to the router by using segmented packets. For example, the segmented packets include a 1^{st} segment of segmented packet and a 2^{nd} segment of segmented packet. The 1^{st} segment of segmented packet includes a MAC header, an IP header, a TCP header, a first part of data body, and the like. The 2^{nd} segment of segmented packet includes a MAC header, an IP header, a TCP header, a second part of data body, and the like. In some implementations, the maximum segment size may be set to 1438 bytes. This is not limited in this embodiment of this application.

When receiving the 1^{st} segment of segmented packet, the router may use the 1^{st} segment of segmented packet as a 1^{st} segment of anchor packet. After backing up the 1^{st} segment of anchor packet, the router may allow the 1^{st} segment of anchor packet to pass. When receiving and recognizing the 2^{nd} segment of segmented packet, the router may reassemble a replica of the 1^{st} segment of anchor packet and a replica of the 2^{nd} segment of segmented packet. If a web address parsed out after the replica of the 1^{st} segment of anchor packet and the replica of the 2^{nd} segment of segmented packet are reassembled is an insecure web address, the router may block the 2^{nd} segment of segmented packet, and does not send the 2^{nd} segment of segmented packet.

However, the SSL protocol, the TCP protocol, and the like have a retransmission mechanism, including, for example, a congestion control mechanism, a retransmission-upon-packet loss mechanism, and a retransmission-upon-timeout mechanism. The retransmission-upon-timeout mechanism is used as an example. When the electronic device detects that the electronic device does not receive a response packet for the 2^{nd} segment of segmented packet within preset duration after the electronic device sends the 2^{nd} segment of segmented packet, the electronic device may resend the 2^{nd} segment of segmented packet.

Because the router has reassembled the replica of the 1^{st} segment of anchor packet and the replica of the 2^{nd} segment of segmented packet and the web address is successfully parsed out, the router deletes, from a DM flow table, an anchor packet generated based on the replica of the 1^{st} segment of anchor packet and the replica of the 2^{nd} segment of segmented packet, to save memory space. In this case, for the 2^{nd} segment of segmented packet resent by the electronic device, because the DM flow table of the router does not include an anchor packet for matching against the 2^{nd} segment of segmented packet, the router sends the 2^{nd} segment of segmented packet. In this case, a server may receive all segmented packets, to obtain a complete web address through reassembly. Consequently, the router fails to block an insecure web address.

For the case in FIG. 7, in embodiments of this application, after segmented packets are reassembled and an insecure web address is parsed out, a mark (mark) may be added to connection tracking of a data flow corresponding to the web address, to indicate that the data flow corresponding to the web address is an insecure data flow. In this case, the router may block, based on the mark (mark), a subsequent packet related to the data flow, to block a retransmitted segmented packet.

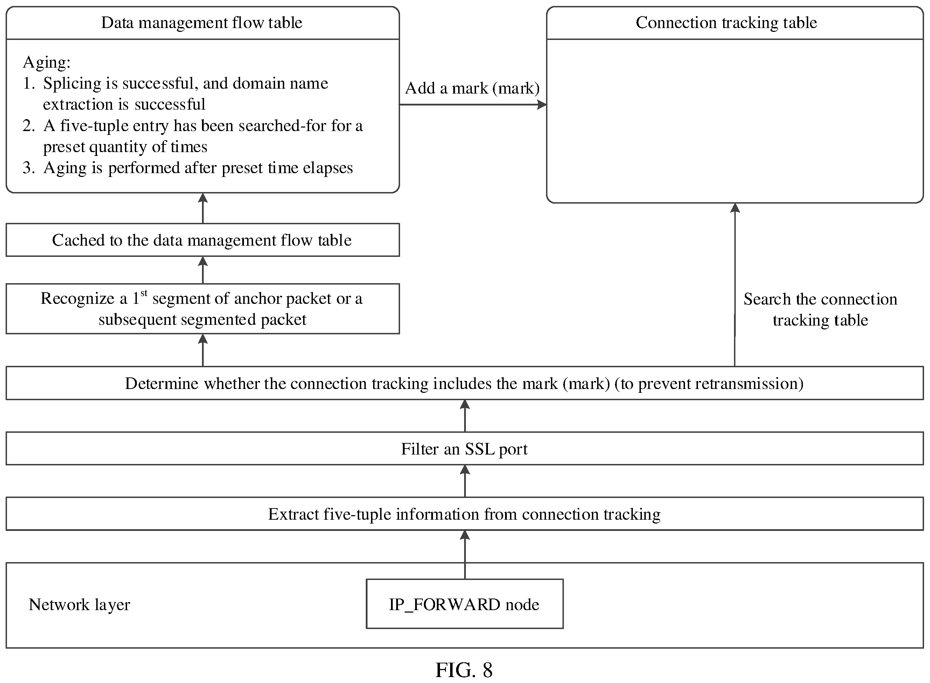

For example, as shown in FIG. 8, a network layer of a protocol may include an IP_FORWARD node. The IP_FORWARD node may be configured to control data packet forwarding, for example, allow a router to process a to-be-forwarded data packet before the data packet is forwarded. In a possible implementation, a kernel forwarding plane of the router may introduce the to-be-forwarded packet into parsing logic of the IP_FORWARD node.

In the parsing logic of the IP_FORWARD node, when the router receives a segmented packet, the kernel forwarding plane of the router may obtain five-tuple information from connection tracking. The five-tuple information may be used to filter out a packet whose destination port is 443 (that is, an HTTPS packet). In addition, the five-tuple information may be used to search a connection tracking table for connection tracking corresponding to the five-tuple information, and determine whether the connection tracking includes a mark (mark).

The connection tracking including the mark (mark) indicates that a data flow to which the segmented packet belongs is recognized as a data flow including an insecure web address, and the segmented packet needs to be discarded. In this case, the router may block the segmented packet.

The connection tracking including no mark (mark) indicates that a data flow to which the segmented packet belongs is not recognized as a data flow including an insecure web address. In this case, the kernel forwarding plane may further process the segmented packet.

The kernel forwarding plane identifying that the segmented packet including a Client Hello mark indicates that the segmented packet is a 1^{st} segment of anchor packet, namely, a 1^{st} segment of segmented packet. In this case, the kernel forwarding plane may cache a replica of the 1^{st} segment of anchor packet to a DM flow table, and send the 1^{st} segment of anchor packet. For a specific method for recognizing the 1^{st} segment of anchor packet, refer to related descriptions in step S602 in the embodiment corresponding to FIG. 6. Details are not described again.

If the kernel forwarding plane does not recognize the Client Hello mark, the kernel forwarding plane may perform matching between the segmented packet and a replica of a 1^{st} segment of anchor packet (namely, a replica of a 1^{st} segment of segmented packet) in a DM flow table. When a subsequent segmented packet of the 1^{st} segment of anchor packet is recognized based on five-tuple information and seq&nseq information, the kernel forwarding plane may cache a replica of the subsequent segmented packet to the DM flow table, and reassemble the replica of the subsequent segmented packet with the replica of the 1^{st} segment of anchor packet. For a specific method for recognizing the subsequent segmented packet, refer to related descriptions in step S603 in the embodiment corresponding to FIG. 6. Details are not described again.

For the subsequent segmented packet, if a web address parsed out after the reassembly is an insecure web address, the router may block the subsequent segmented packet, and add a mark (mark) to the connection tracking table. It can be understood that, based on the mark (mark), the router not only can recognize a web address as an insecure web address, but also can recognize a data flow corresponding to the web address as an insecure data flow. In this way, when a segmented packet is retransmitted, the router may successfully block the retransmitted segmented packet, so that the electronic device cannot access the insecure web address.

In addition, the router may clear related information, such as the replica of the 1^{st} segment of anchor packet and the replica of the subsequent segmented packet, in the DM flow table in a timely manner. It can be understood that, information in the DM flow table is cleared in a timely manner, so that a large quantity of segmented packets of different data flows can be processed in limited memory space for a long time, and space occupation of the DM flow table is effectively controlled, to reduce memory space occupied by the router and improve running efficiency of the router.

For example, an electronic device divides a handshake packet into three segmented packets for sending, and a server_name field is in a 3^{rd} segment of segmented packet. In a possible implementation, related information of the three segmented packets sent by the electronic device may be obtained by using a packet capture tool Wireshark. A segmented packet sent by a router may also be obtained through WAN-side packet capture. The WAN-side packet capture may include: obtaining, based on a mirroring packet capture function of a switch, the segmented packet sent by the router. Because the server_name field is in the 3^{rd} segment of segmented packet, the router may parse out a web address when obtaining the 3^{rd} segment of segmented packet. When determining that the parsed-out web address is an insecure web address, the router may block the 3^{rd} segment of segmented packet, in other words, does not send the 3^{rd} segment of segmented packet. In this way, if the segmented packet sent by the router and obtained by using the mirroring packet capture function of the switch does not include the 3^{rd} segment of segmented packet, it can be considered that the router has blocked the insecure web address.

The router may further add a mark (mark) to a data flow to which the 3^{rd} segment of segmented packet belongs. When the electronic device triggers a retransmission mechanism, the electronic device may resend the 3^{rd} segment of segmented packet. In this case, related information indicating that the electronic device has sent the 3^{rd} segment of segmented packet for a plurality of times may be obtained by using the packet capture tool Wireshark. The router may block retransmission of the 3^{rd} segment of segmented packet based on the mark (mark). To be specific, the router may still successfully block the 3^{rd} segment of segmented packet retransmitted by the electronic device. Therefore, even if the electronic device resends the 3^{rd} segment of segmented packet, the segmented packet sent by the router and obtained by using the mirroring packet capture function of the switch still does not include the 3^{rd} segment of segmented packet. In the foregoing manner, it can be testified that the router can successfully block an insecure web address by using the packet processing method for a routing device in embodiments of this application, to reduce attacks from the insecure web address to an electronic device, and improve security of the electronic device.

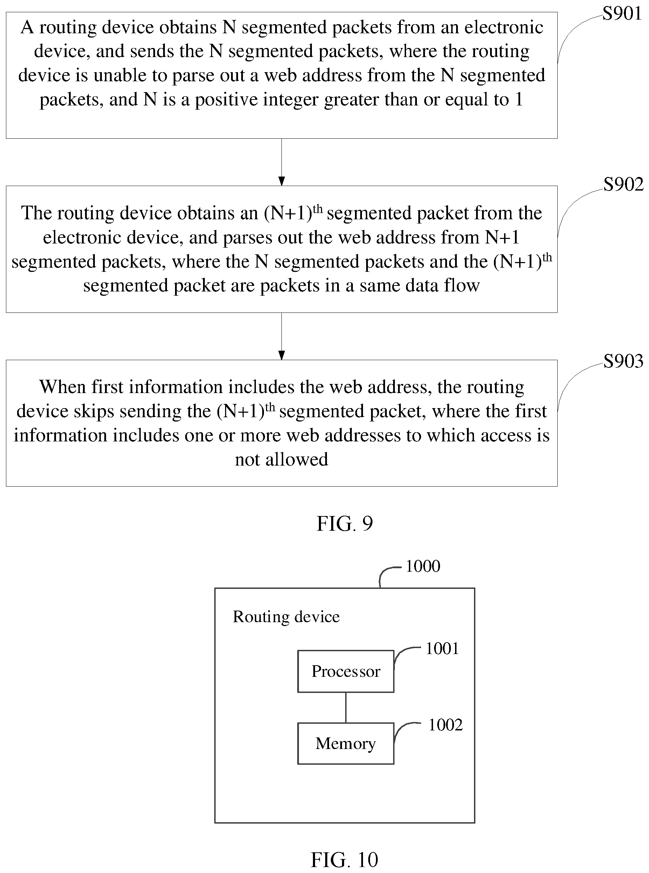

FIG. 9 shows a packet processing method for a routing device according to an embodiment of this application. The method is applied to a routing device, and includes the following steps.

S901: The routing device obtains N segmented packets from an electronic device, and sends the N segmented packets, where the routing device is unable to parse out a web address from the N segmented packets, and N is a positive integer greater than or equal to 1.

In this embodiment of this application, the N segmented packets may include the N segmented handshake packets of the SSL protocol mentioned above. The N segmented handshake packets are used as an example. The routing device may obtain the N segmented handshake packets based on N sk_buff structures. Any one of the N segmented handshake packets includes only a part of handshake information, and the routing device cannot obtain all handshake information of the SSL protocol from one packet. In this case, the routing device needs to reassemble the segmented handshake packets to parse out a complete web address. The N segmented packets may also be referred to as N segments of segmented packets.

For details about recognizing, reassembling, and parsing the segmented packets by the routing device, refer to related descriptions in step S602 and step S603 in the embodiment corresponding to FIG. 6. Details are not described again. It can be understood that, if the routing device cannot parse out the web address from the N segmented packets, the routing device cannot determine whether a packet sent by the electronic device includes an insecure web address. To avoid blocking a network service, the routing device may send the N segmented packets.

S902: The routing device obtains an (N+1)^{th} segmented packet from the electronic device, and parses out the web address from (N+1) segmented packets, where the N segmented packets and the (N+1)^{th} segmented packet are packets in a same data flow.

S903: When first information includes the web address, the routing device skips sending the (N+1)^{th} segmented packet, where the first information includes one or more web addresses to which access is not allowed.

The first information may be understood as the resource information on the router mentioned above. The resource information may be information in a local memory of the routing device, and the resource information may include one or more insecure web addresses.

For a specific process of parsing out, by the routing device, the web address from the N+1 segmented packets, refer to related descriptions of processing a subsequent segmented packet in step S603 in the embodiment corresponding to FIG. 6. Details are not described again.

When the routing device parses out the web address from the N+1 segmented packets, the routing device may perform matching between the parsed-out web address and a web address in the first information, to determine whether the parsed-out web address is an insecure web address, to be specific, whether the parsed-out web address needs to be be blocked. For a specific process of performing, by the routing device, matching between the parsed-out web address and the web address in the first information, refer to related descriptions in step S507 in the embodiment corresponding to FIG. 5 and related descriptions in step S603 in the embodiment corresponding to FIG. 6. Details are not described again.

It can be understood that the first information including the web address indicates that the parsed-out web address is an insecure web address, and the routing device may block the parsed-out web address. This may also be understood as that, if the parsed-out web address is an insecure web address, the routing device does not send a last recognized segmented packet, and therefore a packet received by a server is not a complete packet. In this way, even if a previous 1^{st} segment of segmented packet to a previous N^{th} segment of segmented packet are sent, the server does not receive a complete packet and therefore cannot parse out a complete web address, and therefore the electronic device cannot access an insecure web address.

Optionally, based on the embodiment corresponding to FIG. 9, the method may further include: re-obtaining the (N+1)^{th} segmented packet from the electronic device, and skipping, by the routing device, sending the (N+1)^{th} segmented packet.

It can be understood that some network protocols have a retransmission mechanism. When the electronic device detects that the electronic device does not receive a response packet for the (N+1)^{th} segment of segmented packet within preset duration after the electronic device sends the (N+1)^{th} segment of segmented packet, the electronic device may resend the 2^{nd} segment of segmented packet. In this case, the routing device may re-obtain the (N+1)^{th} segment of segmented packet from the electronic device.

In this embodiment of this application, for the (N+1)^{th} segmented packet re-obtained from the electronic device, the routing device may still not send the (N+1)^{th} segmented packet. For example, after parsing out an insecure web address, the routing device may add a mark (mark) to connection tracking of a data flow corresponding to the web address, to indicate that the data flow corresponding to the web address is an insecure data flow. For details about blocking a retransmitted segmented packet by the routing device, refer to related descriptions in the embodiment corresponding to FIG. 8. Details are not described again. In this way, the routing device may block a subsequent packet related to the data flow, to block a retransmitted segmented packet, so that the electronic device cannot access the insecure web address.

Optionally, based on the embodiment corresponding to FIG. 9, the method may further include: when the first information includes the web address, adding a mark to a data flow to which the (N+1)^{th} segmented packet belongs, where the mark indicates that the data flow includes a web address to which access is not allowed.

In this embodiment of this application, the mark may be understood as the mark (mark) mentioned above. The mark (mark) may indicate that the data flow includes a web address to which access is not allowed. This may also be understood as that a data flow corresponding to the web address is an insecure data flow. Specifically, for a process of adding the mark to the data flow to which the (N+1)^{th} segmented packet belongs, refer to related descriptions in the embodiment corresponding to FIG. 8. Details are not described again.

It can be understood that, the mark is added, so that the router not only can recognize a web address as an insecure web address, but also can recognize a data flow corresponding to the web address as an insecure data flow. In this way, when a segmented packet is retransmitted, the router may successfully block the retransmitted packet, so that the electronic device cannot access the insecure web address.

Optionally, based on the embodiment corresponding to FIG. 9, the method may further include: re-obtaining the (N+1)^{th} segmented packet from the electronic device, and skipping, by the routing device based on the mark, sending the (N+1)^{th} segmented packet.

When the routing device re-obtains the (N+1)^{th} segmented packet from the electronic device, the routing device may determine, based on the mark, that a data flow corresponding to the (N+1)^{th} segmented packet is an insecure data flow, and the data flow includes a web address to which access is not allowed. In this case, the routing device may not send the (N+1)^{th} segmented packet. In this way, the routing device blocks an insecure packet.

Optionally, based on the embodiment corresponding to FIG. 9, obtaining the N segmented packets from the electronic device, and sending the N segmented packets includes: obtaining an i^{th} segmented packet from the electronic device; updating and storing a first anchor packet, where the first anchor packet is obtained based on i segmented packets from a 1^{st} segmented packet to the i^{th} segmented packet, and i is a positive integer less than or equal to N; and sending the i^{th} segmented packet, where the routing device is unable to parse out the web address from the first anchor packet.

The first anchor packet may be understood as an anchor packet generated by the routing device in a process of obtaining the N segmented packets. The first anchor packet may be continuously updated along with a received segmented packet.

For example, when the routing device obtains a 1^{st} segmented packet, the routing device may recognize a replica of the 1^{st} segmented packet as a 1^{st} segment of anchor packet. When the routing device obtains a 2^{nd} segmented packet, the routing device may reassemble the replica of the 1^{st} segment of anchor packet and a replica of the 2^{nd} segment of segmented packet into a new anchor packet. When the routing device obtains a 3^{rd} segmented packet, the routing device may reassemble the anchor packet updated last time and a replica of the 3^{rd} segment of segmented packet into a new anchor packet, to continuously update the anchor packet. For details about updating and saving the anchor packet, refer to related descriptions in step S603 in the embodiment corresponding to FIG. 6. Details are not described again.

It can be understood that, when the web address cannot be parsed out based on an updated anchor packet, the routing device cannot determine whether a packet sent by the electronic device includes an insecure web address. Therefore, to avoid blocking a network service, the routing device may back up the new anchor packet, and send the i^{th} segment of segmented packet.

Optionally, based on the embodiment corresponding to FIG. 9, the first anchor packet is obtained by combining the i segmented packets based on sequence-number-and-next-sequence-number information.

The sequence-number-and-next-sequence-number information (seq&nseq information) may be used to track a sequence of segmented packets, so that the segmented packets can be reassembled in a correct sequence, to obtain the first anchor packet. For details about the sequence-number-and-next-sequence-number information and an implementation of obtaining the first anchor packet based on the sequence-number-and-next-sequence-number information, refer to related descriptions in step S603 in the embodiment corresponding to FIG. 6. Details are not described again.

In this way, based on the sequence-number-and-next-sequence-number information, the routing device may append a subsequent segmented packet to the replica of the 1^{st} segment of anchor packet, to gradually obtain a complete packet, to implement packet reassembly.

Optionally, based on the embodiment corresponding to FIG. 9, the method may further include: when the first information includes the web address, deleting a second anchor packet, where the second anchor packet is obtained based on N+1 segmented packets from the 1^{st} segmented packet to the (N+1)^{th} segmented packet.

The second anchor packet may be understood as an anchor packet generated by the routing device based on the first anchor packet and the (N+1)^{th} segmented packet when obtaining the (N+1)^{th} segmented packet. The routing device may parse out the web address from the second anchor packet.

In this embodiment of this application, when parsing out the web address, the routing device may release the second anchor packet. In this way, a large quantity of segmented packets of different data flows can be processed in limited memory space for a long time, space occupation of the routing device is effectively controlled, and unnecessary memory data on the router is cleared in a timely manner, to improve running efficiency of the router.

Optionally, based on the embodiment corresponding to FIG. 9, the method may further include: if a quantity of times of matching against second information is greater than or equal to a preset quantity of times of matching, deleting the first anchor packet, where the second information indicates that the N segmented packets and the (N+1)^{th} segmented packet are packets in a same data flow; or if a time interval, from a moment at which the 1^{st} segmented packet is obtained from the electronic device to a moment at which it is determined that the first information includes the web address, is greater than or equal to preset matching duration, deleting the first anchor packet.

The second information may be understood as the five-tuple information mentioned above. The five-tuple information may be used to uniquely identify a data flow. It can be determined, based on the five-tuple information, that the N segmented packets and the (N+1)^{th} segmented packet are packets in a same data flow. Because the routing device performs matching by starting from the 1^{st} segment of segmented packet, the quantity of times of matching against the second information may be understood as a quantity of times of matching against five-tuple information of the 1^{st} segment of segmented packet (the 1^{st} segment of anchor packet).

In this embodiment of this application, the quantity of times of matching against the five-tuple information of the 1^{st} segment of anchor packet exceeding the preset quantity of times of matching indicates that a probability that a packet can be reassembled based on the 1^{st} segment of anchor packet is low. To save memory space, the routing device may delete the first anchor packet.

The time interval, from the moment at which the 1^{st} segmented packet is obtained from the electronic device to the moment at which it is determined that the first information includes the web address, may also be understood as matching duration of the 1^{st} segment of anchor packet. When the matching duration exceeds the preset matching duration, the routing device may delete the first anchor packet.

For the preset quantity of times of matching and the preset matching duration, refer to related descriptions in step S604 in the embodiment corresponding to FIG. 6. Details are not described again. In this way, a large quantity of segmented packets of different data flows can be processed in limited memory space for a long time, and unnecessary memory data on the router is cleared in a timely manner, to reduce memory space occupied by the router and improve running efficiency of the router.

Optionally, based on the embodiment corresponding to FIG. 9, the second information includes five-tuple information of the data flow, the web address includes a web address of a hypertext transfer protocol secure HTTPS type, and the N segmented packets are handshake packets of the secure socket layer SSL protocol.

According to the packet processing method for a routing device provided in this embodiment of this application, the routing device may perform web address reassembly on a plurality of segmented handshake packets of the SSL protocol in a request of an HTTPS type, and parse out, based on the five-tuple information or the like, a web address that the electronic device requests to access. The routing device may further block a web address to which access is not allowed, to reduce attacks from an insecure web address to the electronic device, and improve security of the electronic device.

In the foregoing specific implementations, the objectives, technical solutions, and beneficial effects of embodiments of this application are described in detail. It should be understood that the foregoing descriptions are merely specific implementations of embodiments of this application, but are not intended to limit the protection scope of embodiments of this application. Any modification, equivalent replacement, improvement, or the like made based on the technical solutions in embodiments of this application shall fall within the protection scope of embodiments of this application.

It should be noted that user information (including but not limited to user equipment information, personal information of a user, and the like) and data (including but not limited to data used for analysis, stored data, displayed data, and the like) in this application are information and data that are authorized by the user or fully authorized by all parties. In addition, collection, use, and processing of related data need to comply with related laws, regulations, and standards of related countries and regions. A corresponding operation entry is provided for the user to choose to authorize or reject.

The foregoing mainly describes the technical solutions provided in embodiments of this application from the perspective of the methods. To implement the foregoing functions, corresponding hardware structures and/or software modules for performing the functions are included. A person skilled in the art should be easily aware that the method steps described with reference to embodiments of this application can be implemented by hardware or a combination of hardware and software. Whether a function is performed by hardware or hardware driven by software depends on particular applications and design constraints of the technical solutions. A person skilled in the art may use different methods to implement the described functions for each particular application. However, it should not be considered that the implementation goes beyond the scope of this application.

An embodiment of this application provides a routing device. FIG. 10 is a diagram of a structure of a routing device according to an embodiment of this application. The routing device 1000 may include one or more processors 1001 and a memory 1002. The memory 1002 may be configured to store one or more programs. The one or more processors 1001 may invoke the one or more programs, to enable the routing device 1000 to perform the technical solutions in the foregoing embodiments.

An embodiment of this application provides a chip system. The chip system is used in a routing device, and the chip system may include one or more processors. The one or more processors may be configured to invoke a program, to enable the routing device to perform the technical solutions in the foregoing embodiments.

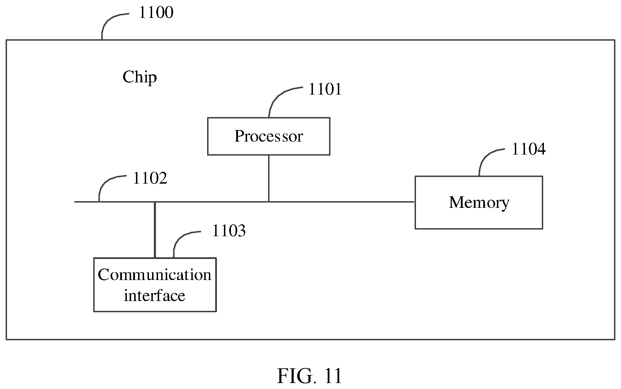

FIG. 11 is a diagram of a structure of a chip system according to an embodiment of this application. The chip system 1100 includes one or more processors 1101, a communication line 1102, a communication interface 1103, and a memory 1104.

In some implementations, the memory 1104 stores the following elements: an executable module or a data structure, or a subset thereof, or an extended set thereof.

The methods described in the foregoing embodiments of this application may be applied to the processor 1101, or may be implemented by the processor 1101. The processor 1101 may be an integrated circuit chip and has a signal processing capability. During implementation, the steps of the foregoing methods may be performed by a hardware integrated logic circuit in the processor 1101 or by using instructions in a form of software. The processor 1101 may be a general-purpose processor (for example, a microprocessor or a conventional processor), a DSP, an application-specific integrated circuit, a field programmable gate array or another programmable logic device, a discrete gate, a transistor logic device, or a discrete hardware component. The processor 1101 may implement or perform the processing-related methods, steps, and logical block diagrams in embodiments of this application.

The methods in embodiments of this application may be performed by a hardware decoding processor, or may be performed by a combination of hardware in a decoding processor and a software module. The software module may be located in the memory 1104, and the processor 1101 may read information in the memory 1104 and perform the steps of the foregoing methods in combination with hardware of the processor 1101. The processor 1101, the memory 1104, and the communication interface 1103 may communicate with each other through the communication line 1102.

An embodiment of this application further provides a readable storage medium (which may also be referred to as a computer-readable storage medium). The readable storage medium includes a program. When the program is run on a routing device, the routing device is enabled to perform the technical solutions in the foregoing embodiments.

All or some of the methods described in the foregoing embodiments may be implemented by software, hardware, firmware, or any combination thereof. If the methods are implemented in software, the functions may be stored in a readable medium or transmitted in a readable medium as one or more instructions or programs. The readable medium may include a storage medium and a communication medium, and may further include any medium capable of transmitting a program from one place to another. The storage medium may be any accessible target medium.

In a possible implementation, the readable medium may include a random access memory, a read-only memory, a programmable read-only memory, an electrically erasable programmable memory, a compact disc read-only memory, another compact disc memory, or the like. The readable medium may further include a magnetic disk memory or another magnetic disk storage device, or any other accessible medium that is intended for carrying or that stores a needed program in a form of an instruction or a data structure.

An embodiment of this application further provides a program product (which may also be referred to as a computer program product). The program product includes a program. When the program is run on a routing device, the routing device is enabled to perform the technical solutions in the foregoing embodiments.

In embodiments of this application, unless otherwise specified or a logic conflict occurs, terms and/or descriptions in embodiments are consistent and may be mutually referenced, and technical features in different embodiments may be combined into a new embodiment based on an internal logical relationship between the technical features.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet processing method for a routing device, applied to a routing device, wherein the method comprises:
obtaining N segmented packets from an electronic device, and sending the N segmented packets, wherein the routing device is unable to parse out a web address from the N segmented packets, and N is a positive integer greater than or equal to 1;
obtaining an (N+1)^{th} segmented packet from the electronic device, and parsing out the web address from the N+1 segmented packets, wherein the N segmented packets and the (N+1)^{th} segmented packet are packets in a same data flow; and
when first information comprises the web address, skipping, by the routing device, sending the (N+1)^{th} segmented packet, wherein the first information comprises one or more web addresses to which access is not allowed.

2. The method according to claim 1, wherein the method further comprises:
re-obtaining the (N+1)^{th} segmented packet from the electronic device, and skipping, by the routing device, sending the (N+1)^{th} segmented packet.

3. The method according to claim 1 or 2, wherein the method further comprises:
when the first information comprises the web address, adding a mark to a data flow to which the (N+1)^{th} segmented packet belongs, wherein the mark indicates that the data flow comprises a web address to which access is not allowed.

4. The method according to claim 3, wherein the method further comprises:
re-obtaining the (N+1)^{th} segmented packet from the electronic device, and skipping, by the routing device based on the mark, sending the (N+1)^{th} segmented packet.

5. The method according to any one of claims 1 to 4, wherein obtaining the N segmented packets from the electronic device, and sending the N segmented packets comprises:
obtaining an i^{th} segmented packet from the electronic device;
updating and storing a first anchor packet, wherein the first anchor packet is obtained based on i segmented packets from a 1^{st} segmented packet to the i^{th} segmented packet, and i is a positive integer less than or equal to N; and
sending the i^{th} segmented packet, wherein the routing device is unable to parse out the web address from the first anchor packet.

6. The method according to claim 5, wherein the first anchor packet is obtained by combining the i segmented packets based on sequence-number-and-next-sequence-number information.

7. The method according to any one of claims 1 to 6, wherein the method further comprises:
when the first information comprises the web address, deleting a second anchor packet, wherein the second anchor packet is obtained based on N+1 segmented packets from the 1^{st} segmented packet to the (N+1)^{th} segmented packet.

8. The method according to any one of claims 1 to 7, wherein the method further comprises:
if a quantity of times of matching against second information is greater than or equal to a preset quantity of times of matching, deleting the first anchor packet, wherein the second information indicates that the N segmented packets and the (N+1)^{th} segmented packet are packets in a same data flow; or
if a time interval, from a moment at which the 1^{st} segmented packet is obtained from the electronic device to a moment at which it is determined that the first information comprises the web address, is greater than or equal to preset matching duration, deleting the first anchor packet.

9. The method according to claim 8, wherein the second information comprises five-tuple information of the data flow, the web address comprises a web address of a hypertext transfer protocol secure HTTPS type, and the N segmented packets are handshake packets of the secure socket layer SSL protocol.

10. A routing device, wherein the routing device comprises one or more processors and a memory, wherein
the memory is configured to store one or more programs, and the one or more processors invoke the one or more programs, to enable the routing device to perform the method according to any one of claims 1 to 9.

11. A chip system, wherein the chip system is used in a routing device, the chip system comprises one or more processors, and the one or more processors are configured to invoke instructions, to enable the routing device to perform the method according to any one of claims 1 to 9.

12. A readable storage medium, wherein the readable storage medium comprises a program, and when the program is run on a routing device, the routing device is enabled to perform the method according to any one of claims 1 to 9.

13. A program product, wherein the program product comprises a program, and when the program is run on a routing device, the routing device is enabled to perform the method according to any one of claims 1 to 9.
